(19) Europäisches Patentamt / European Patent Office / Office européen des brevets

(11) **EP 2 811 490 A1**

(12) **DEMANDE DE BREVET EUROPEEN**

(43) Date de publication:
**10.12.2014 Bulletin 2014/50**

(51) Int Cl.:
**H01B 9/02** *(2006.01)*     **H01B 9/04** *(2006.01)*
**B60L 9/00** *(2006.01)*     **H03H 1/00** *(2006.01)*

(21) Numéro de dépôt: **14167088.5**

(22) Date de dépôt: **06.05.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **04.06.2013 FR 1355125**

(71) Demandeur: **Société Nationale des Chemins de Fer Français - SNCF 93200 Saint Denis (FR)**

(72) Inventeur: **Goeres, David 72000 LE MANS (FR)**

(74) Mandataire: **Pontet Allano & Associes Parc Les Algorithmes, Bâtiment Platon CS 70003 Saint Aubin 91192 Gif sur Yvette Cedex (FR)**

(54) **Câble électrique pour l'atténuation de courants harmoniques et équipement muni d'un tel câble**

(57)     L'invention concerne un câble électrique (300) pour transporter un signal électrique, ledit câble (300) comprenant :
- au moins une âme conductrice (102) pour transporter ledit signal électrique,
- au moins un écran de masse (302), dit couche de blindage, et
- au moins une couche (106) électriquement isolante séparant ladite âme conductrice (102) de ladite au moins une couche de blindage (302) ;

caractérisé en ce que, sur au moins une portion (304,306) dudit câble (300), la couche de blindage (302) est réalisée par bobinage, autour de ladite couche isolante, d'au moins un conducteur électrique.

Elle concerne également un équipement muni d'un tel câble électrique, en particulier un équipement ferroviaire.

**FIG. 3a**

EP 2 811 490 A1

# Description

L'invention concerne un câble électrique pour un signal électrique en particulier pour un signal électrique alternatif, encore plus particulièrement pour un signal électrique haute tension et/ou haute fréquence. Elle concerne également un équipement, en particulier un équipement ferroviaire, muni d'un tel câble.

Le domaine de l'invention est le domaine de l'alimentation d'un équipement électrique et/ou électronique par un signal électrique, et en particulier, le domaine de l'alimentation des dispositifs et systèmes ferroviaires, de transport urbain de type tram train, par une source électrique haute tension. Plus particulièrement, le domaine de l'invention est le domaine des câbles coaxiaux haute tension.

## Etat de la technique

Tout système alimenté par une infrastructure électrique délivrant un signal électrique haute tension comprend un ou des filtres électriques connectés à l'interface entre le système et l'infrastructure, en vue d'atténuer les harmoniques de courants générés par le système électrique dans l'infrastructure. Par exemple, les harmoniques de courants générés par un train sur l'infrastructure alimentant le train sont atténuées par un filtre connecté électriquement au pantographe du train.

Le filtre atténuateur d'harmoniques est constitué de composants connectés électriquement à l'infrastructure électrique délivrant le signal haute tension et dont le volume, le poids et le coût dépendent des grandeurs électriques délivrées par l'infrastructure. De ce fait, les composants du filtre sont coûteux, volumineux et lourds. A titre d'exemple, le filtre atténuateur utilisé dans une locomotive présente un poids d'environ une tonne.

Il existe des solutions alternatives pour diminuer le volume, le poids et le coût du filtre atténuateur d'harmoniques. Par exemple, le document EP 1 126 573 décrit une solution permettant d'utiliser des composants plus petits et plus légers, mais nécessitant tout de même des composants de compensation.

Par conséquent, chacune des solutions connues à ce jour nécessite l'utilisation de composants de compensation et impose, par conséquent, des surcoûts lors de la conception et lors de la maintenance. De plus, une défaillance de ces composants de filtrage peut induire des dysfonctionnements graves sur l'équipement et sur l'infrastructure du fait que la résonance électrique réapparaît et/ou le niveau harmonique émis par l'équipement augmente.

L'invention a pour but de pallier les inconvénients précités.

Notamment, le but de l'invention est de proposer une solution pour l'atténuation d'harmoniques créées par un équipement alimenté par un signal électrique moins coûteux, moins volumineux et nécessitant moins de maintenance.

Enfin, un autre but de l'invention est de proposer une solution pour l'atténuation d'harmoniques créées par un équipement alimenté par un signal électrique, ne nécessitant pas de composants de compensation.

## Exposé de l'invention

L'invention permet d'atteindre au moins l'un des buts précités par un câble électrique pour transporter un signal électrique, en particulier un signal électrique alternatif, encore plus particulièrement un signal électrique haute tension et/ou haute fréquence, ledit câble comprenant :

- au moins une âme conductrice pour transporter ledit signal électrique, et prévue pour être reliée audit équipement au niveau d'au moins une des extrémités et ainsi transmettre le signal électrique audit équipement,
- au moins un écran de masse, dit couche de blindage, prévu pour être relié à une masse électrique dudit équipement à chacune des extrémités dudit câble, et
- au moins une couche électriquement isolante, par exemple réalisée en un diélectrique, séparant ladite au moins une âme conductrice de ladite au moins une couche de blindage ;
  caractérisé en ce que, sur au moins une portion dudit câble, la couche de blindage est réalisée par bobinage, autour de ladite couche isolante, d'au moins un conducteur électrique.

L'invention propose donc un câble électrique comprenant une couche de blindage qui est au moins en partie bobinée, alors que les câbles de l'état de la technique comporte une couche de blindage qui est soit tressée soit constituée par une feuille d'aluminium enroulée. Une telle couche de blindage au moins en partie bobinée permet de modifier l'impédance du câble et d'atténuer les harmoniques créées lors de l'alimentation d'un équipement électrique, comme il sera expliqué ci-après.

Un câble électrique comprenant une âme conductrice et une couche de blindage séparée par une couche isolante se comporte comme une capacité linéique, représentée par un condensateur de valeur $C_1$ disposé entre le conducteur et la couche de blindage. L'impédance équivalente créée par cette capacité linéique est égale à $\dfrac{1}{2.\pi.f.C_1}$, avec $C_1$ la valeur de la capacité linéique en Farad et f est la fréquence en Hertz du signal électrique transporté. Cette impédance diminue lorsque la fréquence du signal augmente.

Cette capacité linéique du câble forme un circuit résonnant LC avec l'inductance de l'infrastructure électrique dans laquelle se trouve le câble électrique, la fréquence de ce circuit résonnant dépendant directement des valeurs de L et C. Un tel circuit résonnant LC amplifie les harmoniques présentes dans l'infrastructure en fonction de sa fréquence de résonance.

Le fait de réaliser une couche de blindage bobinée, au moins sur une portion du câble électrique, permet d'augmenter l'inductance linéique du câble qui vient compenser la capacité linéique du câble et donc son effet amplificateur sur les harmoniques. En effet, une telle couche de blindage bobinée se comporte comme une inductance $L_1$ en série avec la capacité linéique $C_1$ et dont l'impédance est égale à $2.\pi.f.L_1$, avec $L_1$ la valeur de l'inductance en Henry et f est la fréquence en Hertz. Cette impédance augmente lorsque la fréquence augmente, et ainsi les harmoniques sont atténuées ou du moins non amplifiées.

Ainsi, selon l'invention, l'inductance linéique du câble électrique est augmentée grâce à au moins une couche de blindage, au moins en partie, bobinée.

L'âme conductrice peut être réalisé par tout conducteur électrique, sous la forme d'un ou plusieurs fils électriques, par exemple un fil en cuivre ou en un alliage de cuivre.

Un exemple de conducteur bobiné peut être un fil électrique réalisé en cuivre ou en un alliage de cuivre.

Avantageusement, sur au moins une portion dudit câble, la couche de blindage peut être réalisée par bobinage, autour de ladite couche isolante, de plusieurs conducteurs électriques indépendants.

Chaque conducteur électrique bobiné peut avantageusement être bobiné indépendamment des autres conducteurs électriques. Chaque conducteur électrique bobiné peut être identique aux, ou différent des, autres conducteurs électriques bobinés.

Au moins deux conducteurs électriques indépendants de la couche de blindage d'une même portion du câble électrique selon l'invention peuvent être reliés entre eux en série.

En plus, ou en alternative, au moins deux conducteurs électriques indépendants de la couche de blindage d'une même portion du câble électrique selon l'invention peuvent être reliés entre eux en parallèle.

Selon un premier mode de réalisation particulier et nullement limitatif, la couche de blindage du câble électrique selon l'invention peut être réalisée par bobinage, autour de la couche isolante, d'au moins un conducteur électrique, sur plusieurs portions dudit câble distantes les unes des autres.

Ainsi, le câble électrique selon l'invention peut comprendre, pour la couche de blindage, au moins deux portions bobinées distantes l'une de l'autre.

Dans ce cas, deux portions bobinées voisines peuvent être séparées l'une de l'autre par une portion de la couche de blindage qui peut par exemple être tressée ou constituée par une feuille d'aluminium.

Selon un exemple de réalisation particulier, au moins un conducteur électrique d'une portion de la couche de blindage peut être relié en série à au moins un conducteur électrique d'une autre portion de la couche de blindage.

Selon un autre exemple de réalisation, qui peut être combiné à l'exemple de réalisation précédent, au moins un conducteur électrique d'une portion de la couche de blindage peut être relié en parallèle à au moins un conducteur électrique d'une autre portion de la couche de blindage.

Selon un deuxième mode de réalisation, la couche de blindage du câble électrique selon l'invention peut être réalisée par bobinage, autour de ladite couche isolante, d'au moins un conducteur électrique, sur toute la longueur dudit câble.

Autrement dit, la couche de blindage peut être réalisée entièrement et sur toute la longueur du câble, par bobinage d'un ou plusieurs conducteurs électrique(s).

Le câble selon l'invention peut en outre comprendre une couche, dite gaine de protection, disposée autour de la couche de blindage.

Une telle gaine de protection peut être fabriquée par une matière plastique disposée sur la couche de blindage, par exemple sur toute la longueur du câble.

Le câble électrique selon l'invention peut être utilisé pour la transmission d'un signal électrique haute tension et/ou haute fréquence, en particulier pour alimenter un équipement ferroviaire.

Un tel câble électrique peut en particulier être utilisé pour réaliser la ligne de toiture d'un véhicule ferroviaire.

Selon un autre aspect de l'invention, il est proposé un équipement ferroviaire muni d'un câble selon l'invention, pour transporter un signal alimentant ledit équipement, notamment un signal haute tension de valeur supérieure ou égale à 750V, en particulier égale à 750V, ou 1500V, ou 3000V, ou encore 15kV ou encore 25kV.

L'équipement selon l'invention peut préférentiellement être un équipement ferroviaire roulant, tel que par exemple une locomotive, une motrice, une voiture ferroviaire, une voiture de train ou une voiture de tramway, alimenté par une caténaire.

Dans ce cas, le câble électrique selon l'invention peut être, au moins en partie, un câble de toiture dudit équipement roulant.

D'autres avantages et caractéristiques apparaîtront à l'examen de la description détaillée d'exemples nullement limitatifs, et des dessins annexés sur lesquels :

- la FIGURE 1 est une représentation schématique d'un câble électrique de l'état de la technique utilisé comme ligne de toiture dans un train ;
- la FIGURE 2 est une représentation schématique du circuit électrique équivalent obtenu avec le câble de la FIGURE 1 ;
- les FIGURES 3a et 3b sont des représentations schématiques d'un premier mode de réalisation d'un câble électrique selon l'invention utilisé comme ligne de toiture dans un train ;
- la FIGURE 4 est une représentation schématique du circuit électrique équivalent obtenu avec le câble selon l'invention de la FIGURE 3 ;

- les FIGURES 5a et 5b sont des représentations schématiques d'un deuxième mode de réalisation d'un câble électrique selon l'invention ;
- la FIGURE 6 est une représentation schématique partielle d'une portion bobinée d'une couche de blindage selon l'invention ; et
- la FIGURE 7 est une représentation schématique d'une infrastructure ferroviaire mettant en oeuvre un équipement et un câble selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

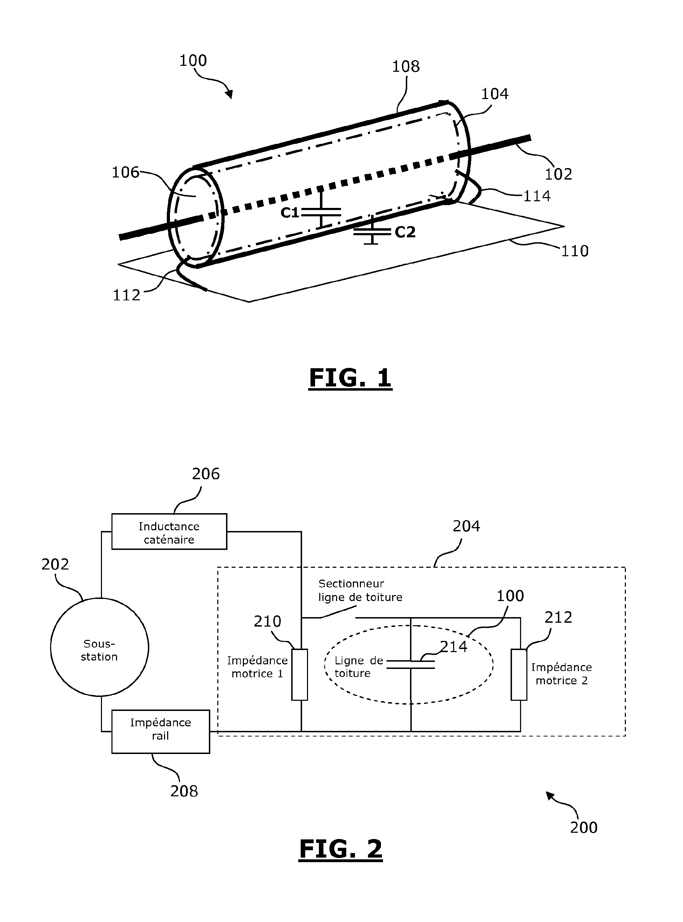

La FIGURE 1 est une représentation schématique d'un câble de toiture d'un train utilisé pour alimenter le train et les composants du train avec un signal électrique haute tension à courant variable.

Le câble 100 représenté sur la FIGURE 1, est une ligne de toiture pour train alimentant le train à partir d'une caténaire.

Le câble 100 comprend :

- une âme conductrice 102, par exemple un fil de cuivre ;
- une couche de blindage 104, également appelée écran de masse, obtenue par tressage de fils conducteurs, par exemple des fils de cuivre ;
- une couche de diélectrique 106 disposée entre l'âme conductrice 102 et la couche de blindage 104, et réalisée en une matière plastique électriquement non conductrice ; et
- une enveloppe 108 de protection, autrement appelée gaine de protection, disposée autour de la couche de blindage 104 pour protéger le câble contre les dégradations extérieures.

Chaque extrémité de la couche de blindage 104 est connectée à la structure de caisse 110 constituant la masse électrique du train, par deux connexions électriquement conductrices 112 et 114.

Le modèle électrique équivalent de cet assemblage est un condensateur de valeur C1 positionné entre l'âme conductrice 102 et la couche de blindage, disposé en série avec un condensateur de valeur C2, positionné entre la couche de blindage 104 et la structure de caisse 110 constituant la masse électrique du train.

Le condensateur de valeur C1 modélise la capacité linéique du câble 100 et est fonction des caractéristiques géométriques de la ligne de toiture. Le condensateur C2 est fonction de la pose du câble 100 et plus précisément, de la ligne de toiture 100.

La FIGURE 2 est une représentation schématique du circuit électrique équivalent de l'assemblage de la FIGURE 1 dans une infrastructure ferroviaire.

Plus précisément, le circuit électrique 200 représenté sur la FIGURE 2, modélise une infrastructure ferroviaire dans laquelle un train, roulant sur des rails, est relié à une sous-station alimentant le train par l'intermédiaire d'une caténaire.

Le circuit électrique 200 comprend un élément 202, sous la forme d'un générateur de signal électrique, modélisant la sous-station fournissant le signal d'alimentation haute tension. Chaque extrémité du générateur 202 est reliée à un circuit électrique 204 modélisant le train, par une impédance 206 modélisant la caténaire et une autre impédance 208 modélisant le ou les rails.

Le circuit électrique 204 modélisant le train comprend des impédances 210 et 212, montées en parallèle, et modélisant chacune une motrice du train, ce dernier en comprenant uniquement deux sur la FIGURE 2. Bien entendu le train peut comprendre un nombre différent de motrice.

En parallèle avec chacune des impédances 210 et 212, le circuit électrique 204 modélisant le train comprend une capacité 214 modélisant la ligne de toiture 100, et plus précisément les capacités C1 et C2 décrits plus haut.

Cette capacité 214, et plus particulièrement la capacité linéique C1 de la ligne de toiture 100 (câble 100) de la FIGURE 1, forme un circuit LC résonnant avec l'inductance équivalente 206 de l'infrastructure électrique. La fréquence de résonance du circuit LC dépend de la valeur de l'inductance 206 et de la capacité 214.

Le circuit LC résonnant introduit une résonance électrique dont la fréquence varie, par exemple entre 9kHz à 17kHz, en fonction de la position du train par rapport à la sous-station. En effet, la valeur de l'inductance équivalente 206 de l'infrastructure est directement liée à la longueur de la caténaire et par conséquent à la position du train par rapport à la sous-station. La valeur de la capacité linéique de la ligne de toiture 100 est constante puisque, les dimensions géométriques de la ligne de toiture 100 ne varient pas. La fréquence de résonance électrique du circuit LC est donc directement liée à la valeur de l'inductance 206 et de la capacité 214. Quand l'inductance 206 varie la valeur de la fréquence de résonance du filtre LC varie également.

Par exemple, sous caténaire monophasée transportant un signal de tension 25kV à 50Hz ou de tension 15kV à 16,7Hz, les trains pourvus de convertisseurs de type Pont Monophasé à Commutation Forcée génèrent des harmoniques de courant de l'ordre de quelques dizaines de milliampères à des fréquences proches de la fréquence de résonance détaillée précédemment. Ces harmoniques, circulant dans la boucle « train/rail/sous-station/caténaire », sont amplifiés par le circuit résonnant LC et atteignent des valeurs de plusieurs centaines de milliampères. Ces centaines de milliampères circulent dans le rail, et sont susceptibles de perturber des équipements d'infrastructure, tels que par exemple des circuits de voie.

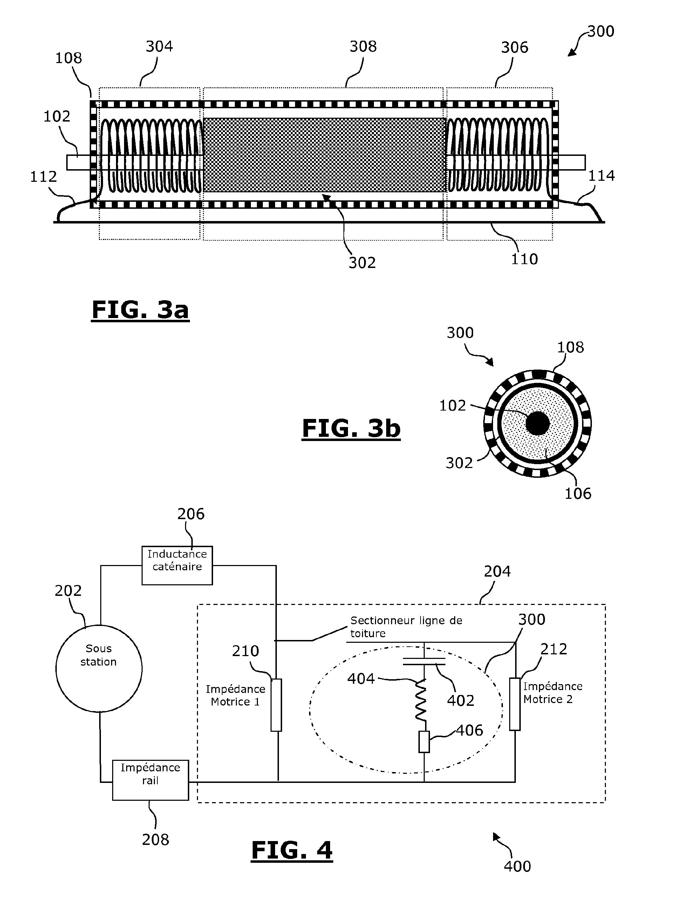

La FIGURE 3a est une représentation schématique selon une vue de côté d'un premier mode de réalisation d'un câble électrique selon l'invention utilisé comme ligne de toiture dans un train.

La FIGURE 3b est une représentation schématique selon une vue de coupe du câble électrique de la FIGURE 3a.

Le câble électrique 300 représenté sur les FIGURES 3a et 3b est également une ligne de toiture pour train, alimentant le train à partir d'une caténaire reliée à une sous-station fournissant le signal électrique.

Le câble 300 comprend tous les éléments du câble 100 de la FIGURE 1.

Cependant, la couche de blindage 302 du câble 300 est différente de la couche de blindage 104 du câble 100. En effet, la couche de blindage 302 du câble 300 comprend deux portions 304 et 306 obtenues chacune par bobinage d'au moins un conducteur électrique, tel qu'un fil de cuivre, autour de la couche isolante 106 du câble. Les portions bobinée 304 et 306 de la couche de blindage 302 sont distantes l'une de l'autre, et séparées l'une de l'autre par une portion 308 tressée, selon les techniques de l'état de l'art, faisant également partie de la couche de blindage.

Bien que la couche de blindage 302 du câble 300 représentée sur la FIGURE 3 comporte deux portions bobinées, il est possible que la couche de blindage du câble selon l'invention comporte uniquement une seule portion bobinée ou plus de deux portions bobinées.

La FIGURE 4 est une représentation schématique du circuit électrique équivalent de l'assemblage de la FIGURE 3 dans une infrastructure ferroviaire.

L'infrastructure ferroviaire est celle décrite plus haut en référence à la FIGURE 2, et comprend un train équipé de deux motrices roulant sur un/des rail(s), alimenté par une sous-station par l'intermédiaire d'une caténaire.

Le circuit électrique 400 comprend l'élément 202 modélisant la sous-station qui fournit le signal d'alimentation haute tension. Chaque extrémité du générateur 202 est reliée à un circuit électrique 204 modélisant le train, par une impédance 206 modélisant la caténaire et une autre impédance 208 modélisant le ou les rails, de la même manière que dans le circuit 200 de la FIGURE 2.

Le circuit électrique 204 modélisant le train comprend des impédances 210 et 212, montées en parallèle, et modélisant chacune une motrice du train. Bien entendu le train peut comprendre un nombre différent de motrices.

Le câble 300, qui, dans cet exemple est la ligne de toiture d'un train, est modélisé par les éléments suivants montés en série les uns par rapport aux autres :

- une capacité 402, qui représente la somme de la capacité linéique équivalente de ligne de toiture 300 et de la capacité formée entre la couche de blindage 302 et la caisse 100 du train ;
- une inductance 404, représentant la somme des inductances introduites dans la ligne de toiture par les portions bobinées 304 et 306 ; et
- une résistance 406 représentant la résistance équivalente de la ligne de toiture 300.

L'ensemble formé par la capacité 402, l'inductance 404 et la résistance 406 représente donc l'impédance de la ligne de toiture 300, et est monté en parallèle avec les impédances 210 et 212 représentant, chacune, une des motrices du train.

Par conséquent, comparé à la ligne de toiture 100, les portions bobinées 304 et 306, introduisent une inductance en série avec la capacité linéique de la ligne de toiture 300.

L'introduction de l'inductance 404 permet de modifier les caractéristiques électriques du câble 300 formant la ligne de toiture et de compenser la capacité linéique de la ligne de toiture afin de modifier l'impédance équivalente du câble 300 quand la fréquence augmente.

De manière simplifiée, la compensation de la capacité linéique du câble 300 par l'inductance permet d'augmenter l'impédance du câble 300 lorsque la fréquence augmente. En effet, l'impédance d'une inductance est proportionnelle à la fréquence et est donnée par la relation $2.\pi.f.L$ dans laquelle f est la fréquence et L la valeur de l'inductance. L'impédance de l'inductance augmente avec la fréquence. Elle permet ainsi de compenser la baisse de l'impédance induite par la capacité linéique du câble. De ce fait, l'impédance entre le câble haute tension et la masse reste suffisamment élevée pour limiter la circulation des harmoniques entre la caténaire et la masse du train rail. La résonnance électrique est atténuée, les harmoniques ne sont plus amplifiés.

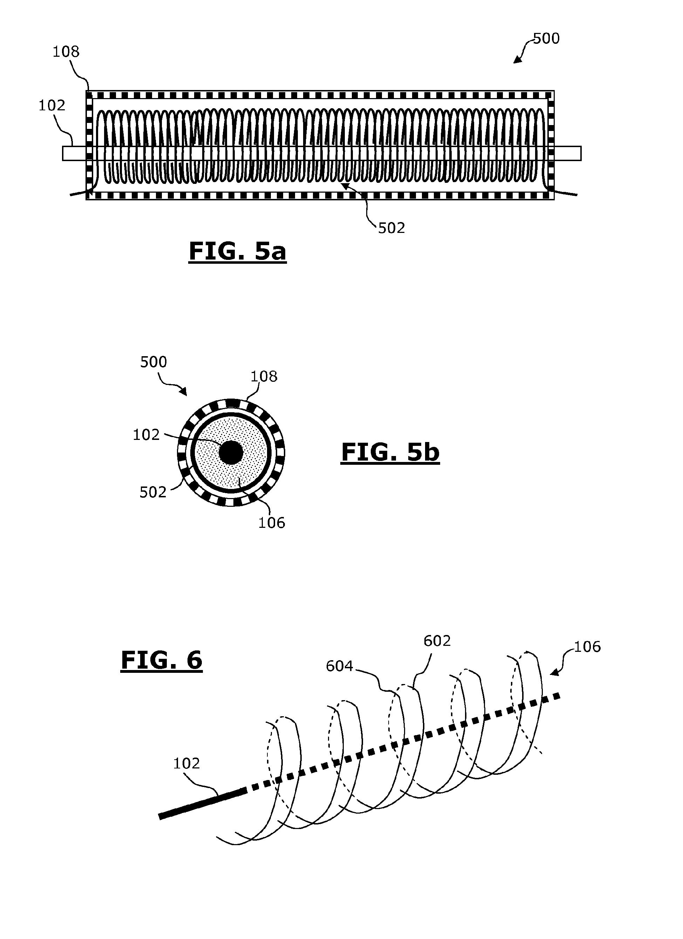

La FIGURE 5a est une représentation schématique selon une vue de côté d'un deuxième mode de réalisation d'un câble électrique selon l'invention.

La FIGURE 5b est une représentation schématique selon une vue de coupe du câble de la FIGURE 5a.

Le câble 500 représenté sur les FIGURES 5a et 5b comprend une âme conductrice 102, par exemple un fil de cuivre, une couche de blindage 502, une couche de diélectrique 106 disposée entre l'âme conductrice 102 et la couche de blindage 502, et réalisée en une matière plastique électriquement non conductrice, et une gaine de protection 108, disposée autour de la couche de blindage 104 pour protéger le câble 500 contre les dégradations extérieures.

Le câble 500 diffère du câble 300 et du câble 100 en ce que la couche de blindage 502 est entièrement réalisée par bobinage d'un ou plusieurs conducteurs électriques autour de la couche diélectrique 106.

La FIGURE 6 est une représentation schématique partielle d'une portion bobinée d'une couche de blindage selon l'invention.

Dans l'exemple représenté sur la FIGURE 6, une portion bobinée d'une couche de blindage est réalisée par bobinage de deux conducteurs électriques 602 et 604, par exemple des fils de cuivre, indépendants l'un de l'autre. Plus précisément, les deux conducteurs électriques 602 et 604 sont bobinés autour de la couche isolante diélectrique de manière parallèle l'un par rapport à l'autre.

Bien entendu, le bobinage peut être réalisé en utilisant uniquement un seul conducteur électrique ou en utilisant plus de deux conducteurs électriques.

De manière générale et quel que soit le mode de réalisation ou l'utilisation d'un câble selon l'invention :

- lorsqu'une portion bobinée de la couche de blindage est réalisée en utilisant au moins deux conducteurs électriques indépendants, au moins deux conducteurs bobinés de cette portion peuvent être reliés entre eux en série ou en parallèle ;
- lorsque la couche de blindage comprend deux portions bobinées distante l'une de l'autre alors, au moins un conducteur électrique d'une portion bobinée de la couche de blindage peut être relié à au moins un conducteur électrique d'une autre portion bobinée de la couche de blindage, en série ou en parallèle ;
- lorsque la couche de blindage comprend plusieurs portions bobinées, au moins une, voire chacune, des portions bobinées peut être réalisée par utilisation d'un nombre différent de conducteur(s) bobiné(s), d'une nature différente de conducteur(s) bobiné(s), et chaque portion peut présenter au moins une dimension ou une géométrie (longueur, largeur, section, forme et/ou épaisseur) différente(s).

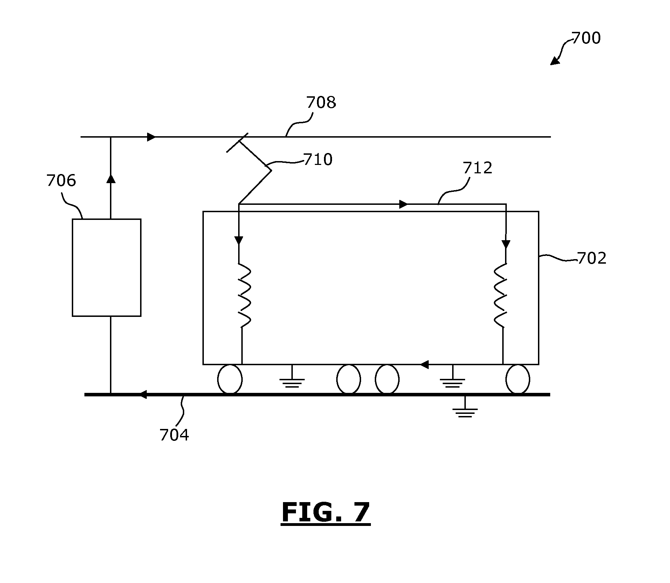

La FIGURE 7 est une représentation schématique d'une infrastructure ferroviaire mettant en oeuvre un équipement ferroviaire selon l'invention muni d'un câble selon l'invention, faisant office de ligne de toiture de l'équipement ferroviaire.

L'installation 700 représentée sur la FIGURE 7 est une installation ferroviaire pour alimenter un équipement ferroviaire selon l'invention tel qu'un véhicule ferroviaire 702, qui peut être une/des motrices ou une/des voitures de train, circulant sur une voie ferrée 704.

Le véhicule ferroviaire 702 est alimenté par un signal haute tension de 25 kV fourni par une sous-station 706 reliée au véhicule ferroviaire 702 par une ligne haute tension, telle qu'une caténaire 708, reliant la sous-station 706 au véhicule ferroviaire 702.

Le véhicule 702 est connecté à la caténaire 708 par l'intermédiaire d'un pantographe 710 et d'une ligne de toiture 712, cette ligne de toiture étant réalisée par un câble selon l'invention, tel que le câble 300 ou le câble 500 décrits plus haut en référence aux FIGURES 3 et 5, respectivement.

Bien entendu l'invention n'est pas limitée aux exemples qui viennent d'être décrits.

**Revendications**

1. Câble électrique (300;500;712) pour transporter un signal électrique haute tension d'alimentation d'un équipement ferroviaire, en particulier câble de toiture d'un équipement ferroviaire roulant, ledit câble (300;500;712) comprenant :

   - au moins une âme conductrice (102) pour transporter ledit signal électrique,
   - au moins un écran de masse (302;502), dit couche de blindage, et
   - au moins une couche (106) électriquement isolante séparant ladite âme conductrice (102) de ladite au moins une couche de blindage (302;502) ;

   **caractérisé en ce que**, sur au moins une portion (304,306;502) dudit câble (300;500;712), la couche de blindage (302;502) est réalisée par bobinage, autour de ladite couche isolante, d'au moins un conducteur électrique (602,604).

2. Câble (300;500;712) selon la revendication 1, **caractérisé en ce que**, sur au moins une portion (304,306;502) dudit câble (300;500;712), la couche de blindage (302;502) est réalisée par bobinage, autour de ladite couche isolante, de plusieurs conducteurs électriques indépendants (602,604).

3. Câble (300;500;712) selon la revendication précédente, **caractérisé en ce qu'**au moins deux conducteurs électriques indépendant (602;604) de la couche de blindage (302;502) d'une même portion (304,306;502) dudit câble (300;500) sont reliés entre eux en série.

4. Câble (300;500;712) selon l'une quelconque des revendications 2 ou 3, **caractérisé en ce qu'**au moins deux conducteurs électriques indépendant (602;604) de la couche de blindage (302;502) d'une même portion (304,306;502) dudit câble (300;500;712) sont reliés entre eux en parallèle.

5. Câble (300;712) selon l'une quelconque des revendications précédentes, **caractérisé en ce que** la couche de blindage (302) est réalisée par bobinage, autour de ladite couche isolante (106), d'au moins un conducteur électrique (602,604), sur plusieurs portions (304,306) dudit câble (300;712) distantes les unes des autres.

6. Câble (300;712) selon la revendication 5, **caractérisé en ce qu'**au moins un conducteur électrique (602,604) d'une portion (304) de la couche de blindage (302) est relié en série à au moins un conducteur électrique (602,604) d'une autre portion (306) de ladite couche de blindage (302).

7. Câble (300;712) selon l'une quelconque des revendications 5 ou 6, **caractérisé en ce qu'**au moins un conducteur électrique (602,604) d'une portion (304) de la couche de blindage (302) est relié en parallèle à au moins un conducteur électrique (602,604) d'une autre portion (306) de ladite couche de blindage (302).

8. Câble (500;712) selon l'une quelconque des revendications 1 à 4, **caractérisé en ce que** la couche de blindage (502) est réalisée par bobinage, autour de ladite couche isolante, d'au moins un conducteur électrique (602,604), sur toute la longueur dudit câble (500;712).

9. Câble (300;500;712) selon l'une quelconque des revendications précédentes, **caractérisé en ce qu'**il comprend en outre une couche (108), dite gaine de protection, disposée autour de la couche de blindage (302;502).

10. Equipement ferroviaire (204;702) muni d'un câble (300;500;712) selon l'une quelconque des revendications 1 à 9, pour transporter un signal d'alimentation dudit équipement (204;702).

11. Equipement (204;702) selon la revendication précédente, **caractérisé en ce qu'**il consiste en un équipement roulant alimenté par une caténaire (708) et le câble (300;500;712) réalise au moins en partie un câble de toiture dudit équipement roulant.

**FIG. 1**

**FIG. 2**

**FIG. 3a**

**FIG. 3b**

**FIG. 4**

**FIG. 5a**

**FIG. 5b**

**FIG. 6**

**FIG. 7**

Europäisches
Patentamt

European
Patent Office

Office européen
des brevets

**RAPPORT DE RECHERCHE EUROPEENNE**

Numéro de la demande

EP 14 16 7088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 2 037 060 A (TEXAS INSTRUMENTS INC) 2 juillet 1980 (1980-07-02) * page 2, ligne 10 - ligne 35; figure 1 * ----- | 1-11 | INV. H01B9/02 |
| X | CA 2 160 064 A1 (BROUARD DOMINIQUE [FR]; DUBOTS PATRICK [FR]; MIREBEAU PIERRE [FR]) 12 avril 1996 (1996-04-12) * page 3, ligne 17 - ligne 20 * * page 4, ligne 32 - ligne 33 * * figure 1 * ----- | 1 | ADD. H01B9/04 B60L9/00 H03H1/00 |
| A,D | EP 1 126 573 A2 (SIEMENS AG [DE]) 22 août 2001 (2001-08-22) * alinéa [0017]; figure 2 * ----- | 1 | |
| A | FR 2 665 809 A1 (SCHNITZLER CHARLES [FR]) 14 février 1992 (1992-02-14) * page 4, ligne 14 - ligne 34 * * figures 1,4,5 * ----- | 1 | |
| A | US 2005/072594 A1 (GRAY RICHARD [US]) 7 avril 2005 (2005-04-07) * alinéas [0001], [0003], [0004], [0036], [0037], [0053], [0054] * * figure 3 * ----- | 1 | DOMAINES TECHNIQUES RECHERCHES (IPC) |
| A | US 2 387 783 A (TAWNEY GERELD L) 30 octobre 1945 (1945-10-30) * page 3, colonne de droite, ligne 34 - ligne 53; figure 2 * ----- | 1 | H01B B60L B60M H02J H01P H01F H03H |
| A | CN 202 150 299 U (ANHUI HUAXING CABLE GROUP CO LTD) 22 février 2012 (2012-02-22) * abrégé; figure 1 * ----- | 1 | |
| A | DE 10 2009 048663 A1 (SIEMENS AG [DE]) 31 mars 2011 (2011-03-31) * alinéas [0001], [0005], [0006], [0013], [0031]; figure 3 * ----- | 1 | |

Le présent rapport a été établi pour toutes les revendications

| Lieu de la recherche | Date d'achèvement de la recherche | Examinateur |
|---|---|---|
| La Haye | 23 octobre 2014 | Hillmayr, Heinrich |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**   EP 14 16 7088

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-10-2014

| Document brevet cité au rapport de recherche | | Date de publication | Membre(s) de la famille de brevet(s) | | Date de publication |
|---|---|---|---|---|---|
| GB 2037060 | A | 02-07-1980 | DE | 2939971 A1 | 10-04-1980 |
| | | | FR | 2438324 A1 | 30-04-1980 |
| | | | GB | 2037060 A | 02-07-1980 |
| CA 2160064 | A1 | 12-04-1996 | CA | 2160064 A1 | 12-04-1996 |
| | | | EP | 0707322 A1 | 17-04-1996 |
| | | | FR | 2725555 A1 | 12-04-1996 |
| | | | JP | H08115620 A | 07-05-1996 |
| EP 1126573 | A2 | 22-08-2001 | EP | 1126573 A2 | 22-08-2001 |
| | | | ES | 2349454 T3 | 03-01-2011 |
| FR 2665809 | A1 | 14-02-1992 | AUCUN | | |
| US 2005072594 | A1 | 07-04-2005 | AUCUN | | |
| US 2387783 | A | 30-10-1945 | AUCUN | | |
| CN 202150299 | U | 22-02-2012 | AUCUN | | |
| DE 102009048663 | A1 | 31-03-2011 | DE | 102009048663 A1 | 31-03-2011 |
| | | | RU | 2012117831 A | 10-11-2013 |
| | | | WO | 2011036006 A1 | 31-03-2011 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1126573 A